# EUROPEAN PATENT SPECIFICATION

(11) **EP 3 804 579 B1**
(45) Date of publication and mention of the grant of the patent: **08.02.2023**
(21) Application number: 19720929.9
(22) Date of filing: 20.03.2019
(51) Int. Cl.: A47J 31/44, B30B 9/00, B65B 69/00, B09B 3/00

(54) **COFFEE CAPSULE RECYCLER**
VORRICHTUNG ZUM RECYCLING VON KAFFEEKAPSELN
RECYCLEUR DE CAPSULES DE CAFÉ

(30) Priority: 24.05.2018 ES 201830762 U
(43) Date of publication of application: 14.04.2021
(73) Proprietor: Garcia Medrano, Joan, 08458 Sant Pere de Vilamajor, Barcelona (ES)
(72) Inventor: Garcia Medrano, Joan, 08458 Sant Pere de Vilamajor, Barcelona (ES)
(74) Representative: Hernández Hernández, Carlos
(86) International application number: PCT/ES2019/070186
(87) International publication number: WO 2019/224408

(56) References cited:
- EP-A1- 2 158 829
- DE-A1-102008 041 793
- ES-U- 1 068 799
- IT-A1- MI20 100 490

## Description

### OBJECT OF THE INVENTION

As indicated by its title, the present invention relates to a coffee capsule recycler that allows a simple recycling of coffee capsules, separating the used coffee from the capsule.

The invention is characterised by the special design and form of the capsule, which makes it a device that is simple to produce and easy to use.

Thus, the present invention belongs to the field of accessories related to coffee making with capsules, and to the machines or tools used for recycling.

### BACKGROUND OF THE INVENTION

There is an increasing number of people who have coffee makers with a single dose in their homes, which are quick, clean and convenient to use. However, this is not always good for the environment. The millions of capsules generated once used and discarded now represent an environmental challenge, as they cannot be recycled by consumers in a simple manner. In view of this problem and at the request of environmentally conscious customers, manufacturers are developing mechanisms to minimise their environmental impact. Some have chosen to conduct research and development of biodegradable materials, others to create own recycling networks, which are as yet limited but in constant growth.

Coffee capsules are not considered as containers in the Law on Containers and Waste. This is because the capsules are inseparable from the product they contain. Consequently, they cannot enter the recycling chain in which bottles, cans or tetra bricks are deposited in yellow containers, and must be recycled in other ways.

Accordingly, some companies have set up collection and recycling programs for these products, which is expensive and costly.

In the state of the art are known different devices which seek to recycle coffee capules as the ones disclosed in the following documents:
- IT MI 20 100 490 A1
- ES1068799 U
- EP2158829 A1
- DE 102008041793

The aim of the present invention is thus to provide a system that allows separating the used coffee from the capsule allowing to recycle the latter, developing a system such as that described below, the essence of which is given in claim one.

### DESCRIPTION OF THE INVENTION

The object of the present invention is a single-dose coffee capsule recycler that allows separating the used coffee from the capsule itself. The recycler is based on the use of a type of hinged piston pressed against a container that houses the coffee capsule.

The recycler comprises a first arm provided at its end with a perforated capsule container having an inner annular lip, where in said cylinder the end diametrically opposite the union with the first arm is provided with a hinged union to a second arm that is provided with a piston connected hingedly at the bottom third to said second arm, such that it can be housed in the inner space of the perforated cylinder.

The hinged unions can be formed in all of the possible known manners, and in a preferred embodiment it is achieved by coupling protruding perforated eyelets placed at the hinge points through which a pin passes acting as a hinging shaft.

The design of the second arm means that it can function as a second class lever, as the power is exerted from the free end of the second arm, the fulcrum being the hinge union to the hinged cylinder, and the resistance is that offered by the coffee capsule transmitted by the hinged piston.

Except when stated otherwise, all the technical and scientific elements used in this specification have the meaning usually understood by a person skilled in the art of this invention. In practice, the present invention can use processes and materials that are similar or equivalent to those described in the specification.

Throughout the description and claims the term "comprises" and the various forms thereof are not meant to exclude other techniques, additives, components or steps. A person skilled in the art will recognise that other objects, advantages and features of the invention follow in part from the description and in part from the practising of the invention.

### DESCRIPTION OF THE DRAWINGS

In order to complement the description being made and to aid towards a better comprehension of the features of the invention, according to our preferred practical embodiment, we incorporate as an integral part of said description a set of drawings that are illustrative and not limiting in nature and represent the following.
Figure 1 shows the recycler of the invention in an exploded view.

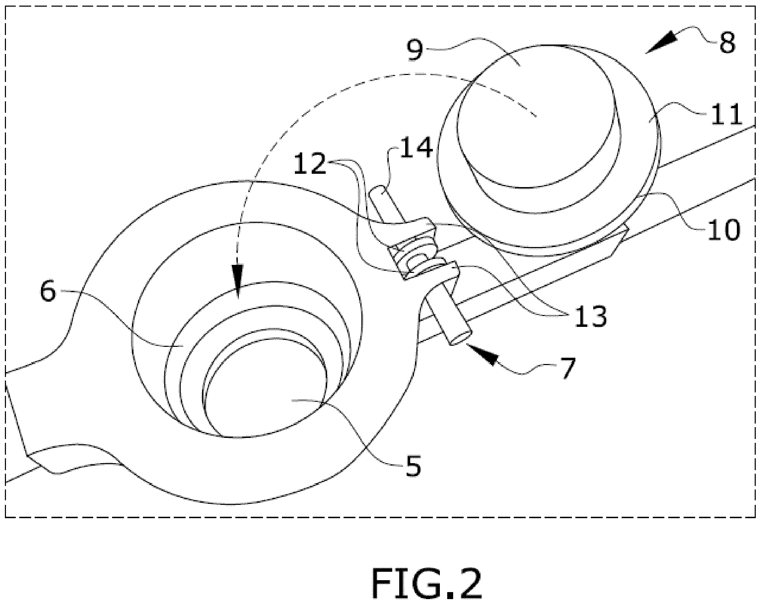

Figure 2 shows a detailed view of the core elements of the recycler.
Figure 3 shows the cross section obtained when cutting the recycler, just before exerting the pressure on a coffee capsule, along a vertical plane that cuts the recycler diametrically.

### PREFERRED EMBODIMENT OF THE INVENTION.

In view of the figures, a preferred embodiment of the proposed invention is described below.

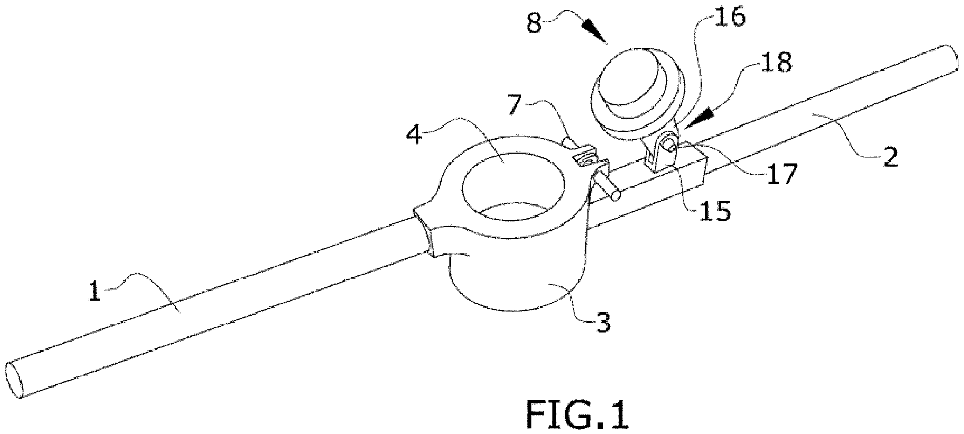

Figure 1 shows that the recycler of the invention comprises a first arm (1) that can be referred to as fixed, and a second arm (2) that will be referred to as hinged as it moves in a hinged manner with respect to the first arm.

The first arm (1) is provided on one of its ends with a through capsule container (3) that has a hinge (7) for union to the second arm (2) at the opposite point to the union to the first arm (1).

The capsule container (3) presents an upper opening (4) and a lower opening (5) where the upper opening (4) has a greater diameter than the lower opening (5), thereby defining an annular step (6) inside the capsule container (3).

Mounted on the second arm(2) is a hinged piston (8) that has a first segment (9) with a cross section slightly smaller than that defined by the lower opening(5) of the capsule container (3), and a second segment (10) with a slightly smaller cross section than the free section of the upper opening(4) of the container (3), defining an annular lip (11) which during the coffee expulsion process will contact the annular lip(6) of the interior of the container.

The hinged union (7) between the two arms in a possible example of embodiment comprises perforated eyelets (13) that protrude from the capsule container (3) in a parallel arrangement, to which are hinged other perforated eyelets (12) that protrude from the second arm (2) and joined by a pin (14).

The hinged union of the hinged piston (8) to the second arm (2) is established by a hinge (18) which in one example of embodiment is established by two perforated eyelets (15) protruding from the second arm (2) in a parallel arrangement, between which is coupled a perforated eyelet (16) protruding from the hinged piston (8), the two perforated eyelets being connected by a pin (17).

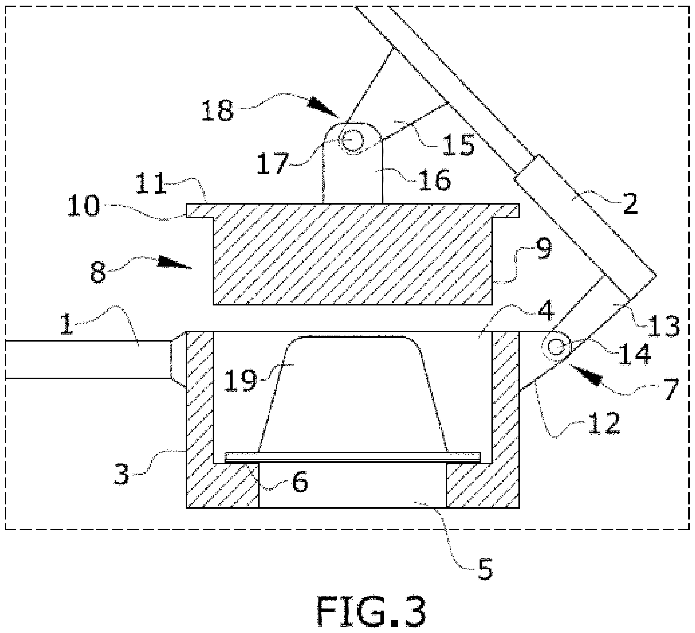

Figure 3 shows how the coffee capsule (19) housed in the capsule container (3) such that the peripheral edge thereof rests on the annular lip (6), when the hinged piston (8) descends, will press against the rear part of the capsule (9) such that the coffee will exit on the bottom part, so that the capsule is emptied of all of its contents allowing to recycle the coffee capsules once empty.

The materials used to manufacture them can be any which comply with the structural requirements set by the recycler, including metals, plastics, etc., preferably using plastic, without this limiting the invention.

Having sufficiently described the nature of the present invention and the embodiment thereof, it is noted that without departing from the essence thereof, other embodiments are possible that may differ in certain details from that given by way of example, which will also be included in the scope of protection as defined by the claims.

## Claims

1. Coffee capsule recycler comprising a first arm (1) provided at its end with a perforated capsule container (3), where in said cylinder the end diametrically opposite the union to the first arm (1) is provided with a hinged union (7) to a second arm (2) that is provided with a piston (8) connected by a hinged union (18), so that it can be housed in the inner space of the perforated cylinder.
**Characterized in that**
- The capsule container (3) has an inner annular lip (6)
- the piston (8) is connected by the hinged union at the bottom third thereof to said second arm (2)

2. Coffee capsule recycler according to claim 1 **characterised in that** the capsule container (3) presents an upper opening (4) and a lower opening (5) where the upper opening (4) has a greater diameter than the lower opening (5), thereby defining the annular step (6) inside the capsule container (3).

3. Coffee capsule recycler according to claim 2 **characterised in that** the hinged piston (8) has a first segment (9) with a cross section slightly smaller than that defined by the lower opening(5) of the capsule container (3), and a second segment (10) with a slightly smaller cross section than the free section of the upper opening(4) of the container (3), defining an annular lip (11) which during the coffee expulsion process will contact the annular step (6) of the interior of the container.

4. Coffee capsule recycler according to any of the preceding claims, **characterised in that** the hinged union (7) between the two arms comprises perforated eyelets (13) protruding from the capsule container (3) arranged in parallel, to which are hingedly connected other perforated eyelets (12) protruding from the second arm (2) and connected by a pin (14).

5. Coffee capsule recycler according to any of the preceding claims, **characterised in that** the hinged union (18) of the hinged piston (8) to the second arm (2) comprises two perforated eyelets (15) protruding from the second arm (2) arranged in parallel and between which is coupled a perforated eyelet (16) protruding from the hinged piston (8), the two perforated eyelets being connected by a pin (17).

## Patentansprüche

1. Vorrichtung zum Recycling von Kaffeekapseln umfassend einen ersten Arm (1), welcher an seinem Ende mit einem durchbohrten Kapselbehälter (3) versehen ist, wobei im genannten Zylinder das Ende, welches der Verbindung mit dem ersten Arm (1) diametral gegenüberliegt, mit einer Scharnierverbindung (7) mit einem zweiten Arm (2) versehen ist, welcher mit einem mittels einer Scharnierverbindung (18) angeschlossenen Kolben (8) versehen ist, sodass er im inneren Raum des durchbohrten Zylinders aufgenommen werden kann,
**dadurch gekennzeichnet, dass**
- der Kapselbehälter (3) eine innere Ringlippe (6) aufweist
- der Kolben (8) mittels der Scharnierverbindung am unteren Drittel desselben am genannten zweiten Arm (2) angeschlossen ist.

2. Vorrichtung zum Recycling von Kaffeekapseln nach Anspruch 1, **dadurch gekennzeichnet, dass** der Kapselbehälter (3) eine obere Öffnung (4) und eine untere Öffnung (5) aufweist, wobei die obere Öffnung (4) einen größeren Durchmesser als die untere Öffnung (5) hat, wodurch die Ringstufe (6) innerhalb des Kapselbehälters (3) definiert wird.

3. Vorrichtung zum Recycling von Kaffeekapseln nach Anspruch 2, **dadurch gekennzeichnet, dass** der um ein Scharnier drehbarer Kolben (8) ein erstes Segment (9) mit einem leicht kleineren Querschnitt als derjenige, welcher durch die untere Öffnung (5) des Kapselbehälters (3) definiert wird, und ein zweites Segment (10) mit einem leicht kleineren Querschnitt als der freie Abschnitt der oberen Öffnung (4) des Behälters (3) aufweist, unter Definierung einer Ringlippe (11), welche während des Kaffeeauswurfprozesses in Kontakt mit der Ringstufe (6) des inneren des Behälters kommen wird.

4. Vorrichtung zum Recycling von Kaffeekapseln nach einem der vorhergehenden Ansprüche, **dadurch gekennzeichnet, dass** die Scharnierverbindung (7) zwischen den beiden Armen durchbohrte Ösen (13) umfasst, welche vom Kapselbehälter (3) parallel angeordnet hervorstehen, an welchen andere durchbohrte Ösen (12), welche vom zweiten Arm (2) hervorstehen und mittels eines Stiftes (14) angeschlossen sind, über ein Scharnier angeschlossen sind.

5. Vorrichtung zum Recycling von Kaffeekapseln nach einem der vorhergehenden Ansprüche, **dadurch gekennzeichnet, dass** die Scharnierverbindung (18) des um ein Scharnier drehbaren Kolbens (8) mit dem zweiten Arm (2) zwei durchbohrte Ösen (15) umfasst, welche vom zweiten Arm (2) parallel angeordnet hervorstehen und zwischen welchen eine durchbohrte Öse (16) gekoppelt ist, welche vom um ein Scharnier drehbaren Kolben (8) hervorsteht, wobei die beiden durchbohrten Ösen mittels eines Stiftes (17) angeschlossen sind.

## Revendications

1. Recycleur de capsules de café comprenant un premier bras (1) muni à son extrémité d'un récipient de capsule perforé (3), où dans ledit cylindre l'extrémité diamétralement opposée à l'union au premier bras (1) est munie d'une union articulée (7) à un second bras (2) qui est muni d'un piston (8) relié par une union articulée (18), de sorte qu'il peut être logé dans l'espace intérieur du cylindre perforé.
**Caractérisé en ce que**
- le récipient de la capsule (3) présente un bord annulaire intérieur (6)
- le piston (8) est relié par l'union à charnière au tiers inférieur de celui-ci audit deuxième bras (2)

2. Recycleur de capsules de café selon la revendication 1, **caractérisé en ce que** le conteneur de capsules (3) présente une ouverture supérieure (4) et une ouverture inférieure (5) où l'ouverture supérieure (4) a un plus grand diamètre que l'ouverture inférieure (5), définissant ainsi le gradin annulaire (6) à l'intérieur du conteneur de capsules (3).

3. Recycleur de capsule de café selon la revendication 2, **caractérisé en ce que** le piston articulé (8) a un premier segment (9) avec une section transversale légèrement plus petite que celle définie par l'ouverture inférieure (5) du conteneur de capsule (3), et un second segment (10) avec une section transversale légèrement plus petite que la section libre de l'ouverture supérieure (4) du conteneur (3), définissant un bord annulaire (11) qui, pendant le processus d'expulsion du café, entrera en contact avec le gradin annulaire (6) de l'intérieur du conteneur.

4. Recycleur de capsules de café selon l'une quelconque des revendications précédentes, **caractérisé en ce que** l'union articulée (7) entre les deux bras comprend des oeillets perforés (13) faisant saillie du conteneur de capsules (3) disposés parallèlement, auxquels sont reliés de manière articulée d'autres oeillets perforés (12) faisant saillie du second bras (2) et reliés par un axe (14).

5. Recycleur de capsules de café selon l'une quelconque des revendications précédentes, **caractérisé en ce que** l'union articulée (18) du piston articulé (8) au second bras (2) comprend deux oeillets perforés (15) faisant saillie du second bras (2) disposés parallèlement et entre lesquels est couplé un oeillet perforé (16) faisant saillie du piston articulé (8), les deux oeillets perforés étant reliés par un axe (17).
